**Europäisches Patentamt**

**European Patent Office**

**Office européen des brevets**

(11) Numéro de publication: **0 087 365**
**B1**

(12) **FASCICULE DE BREVET EUROPEEN**

(45) Date de publication du fascicule du brevet:
**14.05.86**

(21) Numéro de dépôt: **83400344.4**

(22) Date de dépôt: **18.02.83**

(51) Int. Cl.⁴: **G 01 N 29/02**

(54) Procédé de mesure par ultrasons du rapport du volume de gaz présent dans une enceinte contenant un mélange liquide-gaz au volume total de l'enceinte.

(30) Priorité: **19.02.82 FR 8202750**

(43) Date de publication de la demande:
**31.08.83 Bulletin 83/35**

(45) Mention de la délivrance du brevet:
**14.05.86 Bulletin 86/20**

(84) Etats contractants désignés:
**BE CH DE GB IT LI SE**

(56) Documents cités:
**EP - A - 0 035 936**
**DE - A - 2 217 308**
**FR - A - 2 159 576**
**US - A - 3 359 787**
**US - A - 4 135 387**

(73) Titulaire: **FRAMATOME ET CIE., Tour Fiat 1, Place de la Coupole, F-92400 Courbevoie (FR)**

(72) Inventeur: **Heinrich, Jean-Paul, 10 allée Eugène Pottier, F-77420 Champs-sur-Marne (FR)**
Inventeur: **Marini, Jean, chemin du Bois Martin, F-78160 Marly le Roi (FR)**

(74) Mandataire: **Lavoix, Jean et al, c/o Cabinet Lavoix 2, Place D'Estienne D'Orves, F-75441 Paris Cedex 09 (FR)**

ACTORUM AG

# Description

L'invention concerne un procédé de mesure par ultrasons du rapport du volume de gaz présent dans une enceinte contenant un mélange diphasique liquide gaz au volume total de l'enceinte ou taux de vide, le gaz non dissous dans le liquide se présentant sous forme d'une couche surmontant le liquide et/ou sous forme de bulles réparties dans le liquide.

Le circuit primaire des réacteurs nucléaires à eau sous pression renferme, lorsque le réacteur est en fonctionnement, de l'eau à une très forte pression de l'ordre de 155 bars et à une température de l'ordre de 310 °C.

Dans le cas d'une rupture sur une canalisation du circuit primaire, la pression de cette eau tombe très rapidement et une vaporisation au moins partielle de l'eau primaire se produit. On utilise alors le circuit d'injection de sécurité du réacteur pour éviter un échauffement trop important du cœur ou des autres parties du circuit primaire.

Dans les instants qui suivent une rupture sur le circuit primaire, il est extrêmement important, pour évaluer l'effet des mesures de sécurité prises et en particulier l'effet de l'injection d'eau dans le circuit primaire, de mesurer la proportion de vapeur présente dans le fluide réfrigérant.

Il est par exemple important de connaître le rapport du volume de vapeur contenu dans une canalisation du circuit primaire au volume total de cette canalisation, après une rupture. Ce rapport, appelé taux de vide, peut bien sûr évoluer très rapidement après la rupture, en fonction de la gravité de cette rupture et de l'efficacité des mesures de sécurité déclenchées automatiquement ou mises en œuvre par l'opérateur conduisant la centrale.

On ne connaissait pas jusqu'ici de procédé extrêmement rapide et extrêmement sûr de détermination du taux de vide dans une partie du circuit primaire d'un réacteur nucléaire.

En effet, la difficulté de cette mesure est accrue par le fait que la vapeur produite dans le circuit primaire peut se présenter sous forme de bulles réparties à l'intérieur de l'eau primaire, sous forme d'une couche de vapeur surmontant l'eau non vaporisée ou encore sous les deux formes simultanément.

On admet généralement que si la vaporisation se poursuit dans le circuit primaire, jusqu'à devenir totale, on rencontre au cours du temps des phases successives où la vapeur est d'abord sous forme de bulles réparties dans l'eau, puis sous forme de bulles réparties dans l'eau et sous forme d'une couche surmontant le mélange eau-bulles de vapeur, puis d'une couche de vapeur de plus en plus importante surmontant l'eau ne renfermant plus de bulles de gaz.

Il est donc très difficile d'imaginer une méthode de mesure du taux de vide permettant de traiter tous ces cas différents.

De façon plus générale, lorsqu'un gaz est introduit dans une enceinte qui normalement ne renferme qu'un liquide, ce gaz étant sous forme de bulles réparties dans le liquide, sous forme d'une couche surmontant le liquide ou simultanément sous ces deux formes, il peut être extrêmement intéressant de connaître le rapport du volume de gaz au volume total de l'enceinte, pour connaître, par exemple, l'importance d'une fuite et déterminer les actions à entreprendre à la suite de cet incident.

Il est d'autre part tout-à-fait exclu de pouvoir accéder directement au fluide disposé à l'intérieur de l'enceinte, ce fluide étant généralement à très haute pression et à très haute température.

On connaît d'autre part l'utilisation des ondes ultrasonores pour la détermination de différents paramètres physiques d'un fluide dans une enceinte ou une canalisation, par mesure d'atténuation ou de temps de propagation. Par exemple, on connaît par la demande de brevet DE-A-2 217 308, un procédé de mesure de la proportion d'air libre non dissous dans le liquide sous pression d'une installation hydraulique, par mesure de la vitesse de propagation d'ultrasons dans le liquide.

On connaît également, par le brevet US-A-4 135 387, un dispositif de surveillance de la proportion d'eau dans la vapeur utilisée dans une installation de production d'énergie. Pour pouvoir effectuer cette surveillance par une simple mesure de vitesse de propagation d'ondes soniques ou ultrasoniques, on effectue dans un premier temps une homogénéisation du mélange eau-vapeur grâce à un premier générateur d'ondes soniques ou ultrasoniques. Un second générateur d'ondes soniques ou ultrasoniques associé à un détecteur de temps de propagation permet de mesurer la vitesse de propagation des ondes émises dans le fluide homogénéisé.

De tels procédés ou dispositifs de mesure ne sont pas utilisables pour la détermination du taux de vide dans le circuit primaire d'un réacteur nucléaire, le mélange diphasique contenu dans ce circuit primaire, en cas d'accident, pouvant se présenter sous des formes différentes et variables au cours du temps. Il est de plus nécessaire, dans le cas de la surveillance du circuit primaire d'un réacteur nucléaire, de connaître très rapidement le taux de vide quelle que soit la forme sous laquelle la vapeur se présente dans le circuit primaire en cours de décompression.

Le but de l'invention est de proposer un premier procédé de mesure par ultrasons du rapport du volume de gaz présent dans une enceinte contenant un mélange diphasique liquide-gaz au volume total de l'enceinte, ledit rapport étant ci-après appelé taux de vide total, le gaz non dissous dans le liquide se présentant sous forme d'une couche surmontant le liquide et/ou sous forme de bulles réparties dans le liquide, ce procédé devant permettre une détermination très rapide du taux de vide quelle que soit la forme sous laquelle se présente le gaz à l'intérieur de l'enceinte.

Dans ce but:

a) on provoque la propagation, à travers ledit mélange, d'une première onde ultrasonore ayant une première fréquence, suivant un premier parcours peu incliné par rapport à une section verticale de cette enceinte et traversant celle-ci,

b) on provoque la propagation, à travers ledit mélange, d'une seconde onde ultrasonore ayant une seconde fréquence différente de ladite première fréquence, suivant un second parcours voisin dudit premier parcours,

c) on mesure la pression d'équilibre dudit mélange diphasique liquide-gaz, ou un paramètre physique directement lié à cette pression,

d) on mesure les temps de propagation des première et seconde ondes ultrasonores sur leur parcours respectif, on compare ces temps de propagation et, si ceux-ci sont égaux à un temps de propagation ci-après dénommé temps de propagation commun,

d1) on calcule, grâce au résultat de ladite mesure de pression d'équilibre, les vitesses de propagation des ondes ultrasonores, à cette pression d'équilibre d'une part dans le gaz, et d'autre part dans le liquide,

d2) on détermine enfin le taux de vide total à partir dudit temps de propagation commun et desdites vitesses de propagation,

e) alors que, si lesdits temps de propagation sont différents,

e1) on détermine la présence ou l'absence d'une onde ultrasonore réfléchie par l'interface gaz-liquide dudit mélange et si, cette onde réfléchie est présente, on mesure son temps de propagation dans le gaz,

e2) on calcule, grâce au résultat de ladite mesure de pression d'équilibre, la vitesse de propagation des ondes ultrasonores à cette pression d'équilibre dans le gaz,

e3) on détermine le taux de vide dû à la couche de gaz à partir dudit temps de propagation dans le gaz de l'onde ultrasonore réfléchie et de ladite vitesse de propagation des ondes ultrasonores dans le gaz,

e4) on calcule la vitesse de propagation de l'une au moins des première et seconde ondes ultrasonores à travers le liquide,

e5) on détermine, à partir de cette dernière vitesse de propagation et en utilisant les relations connues existant entre ladite pression d'équilibre, la fréquence des ondes ultrasonores et cette même vitesse de propagation dans le liquide, le taux de vide dû aux bulles de gaz réparties dans le liquide,

e6) on calcule enfin le taux de vide total par addition dudit taux de vide dû à la couche de gaz et dudit taux de vide dû aux bulles de gaz réparties dans le liquide.

Suivant une variante, dans le cas où les temps de propagation des ondes ultrasonores sont différents, une partie au moins du gaz étant sous forme de bulles réparties dans le liquide et en équilibre avec celui-ci, on détermine le taux de vide sans avoir recours au captage des ondes réfléchies par l'interface gaz-liquide.

On utilise pour celà les relations existant entre la hauteur d'une couche de gaz éventuelle au-dessus du liquide renfermant les bulles de gaz, les vitesses des ondes ultrasonores dans le gaz et le mélange liquide-bulles de gaz et les temps de propagation des ondes à travers le fluide remplissant l'enceinte ainsi que la relation entre les vitesses des ondes dans le mélange liquide-bulles de gaz, pour chacune des fréquences, déterminée préalablement par étalonnage, en fonction du taux de vide dû aux bulles de gaz. A partir de ces relations, on détermine le taux de vide dû aux bulles de gaz réparties dans le liquide, la hauteur de gaz dans l'enceinte et le taux de vide dû au gaz surmontant le liquide.

On détermine ensuite le taux de vide total par addition du taux de vide dû au gaz surmontant le liquide et du taux de vide dû aux bulles de gaz réparties dans le liquide.

Un deuxième procédé suivant l'invention, dans le cas où tout le gaz est uniquement sous forme de bulles réparties dans le liquide est décrit dans la revendication 4.

Afin de bien faire comprendre l'invention, on va maintenant décrire à titre d'exemples les deux suivant l'invention dans le cas d'une enceinte renfermant de l'eau sous pression partiellement vaporisée, la vapeur pouvant se présenter sous forme d'une couche surmontant le liquide et/ou de bulles de gaz réparties dans le liquide et dans le cas d'une canalisation renfermant de l'eau sous pression et de la vapeur sous forme de bulles de gaz réparties dans cette eau sous pression.

La figure 1 représente de façon schématique une installation permettant la détermination du taux de vide dans une enceinte.

La figure 2 est une représentation des variations de la vitesse du son dans un mélange stratifié eau-vapeur, en fonction du taux de vide, suivant la pression du mélange eau-vapeur.

La figure 3 représente, pour trois valeurs de la pression et de la température différentes de l'eau sous pression, les variations de la vitesse du son en fonction de la fréquence d'une onde ultrasonore se propageant dans de l'eau renfermant des bulles de vapeur, suivant le taux de vide.

La figure 4 représente, da façon schématique, une installation pour la mesure du taux de vide dans une canalisation renfermant de l'eau sous pression contenant des bulles de vapeur.

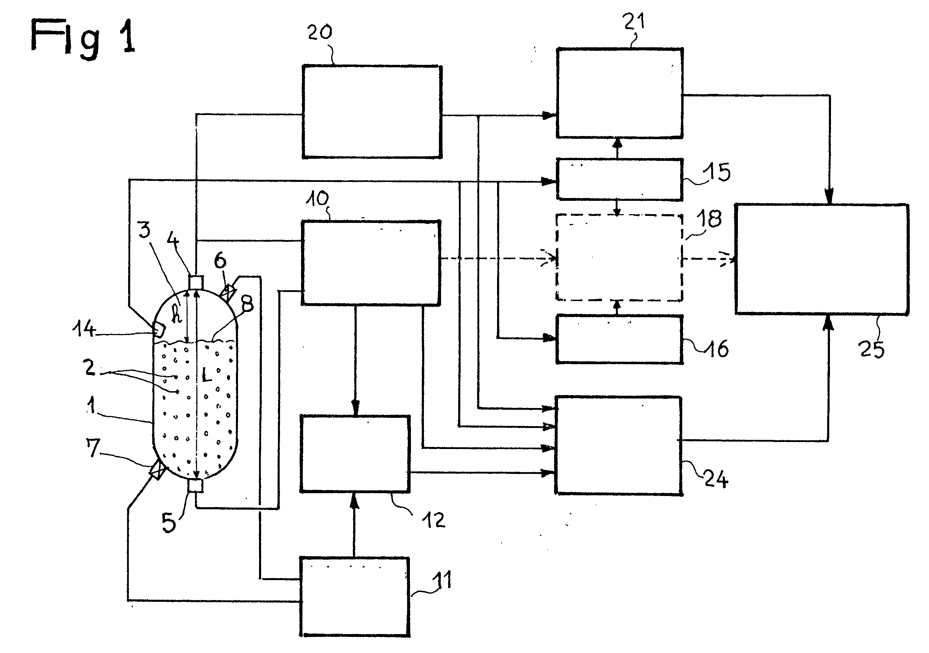

Sur la figure 1, on voit une enceinte 1 renfermant de l'eau et de la vapeur, celle-ci étant à la fois sous forme de bulles 2 réparties dans l'eau et sous forme d'une couche 3 surmontant l'eau non vaporisée.

Cette répartition de l'eau et de la vapeur se présente sous cette forme par exemple dans un récipient renfermant à l'origine de l'eau sous pression qui a subi une dépressurisation et une vaporisation partielles.

Ceci représente le second stade de la vaporisation.

Dans le premier stade, la vapeur est uniquement sous forme de bulles réparties à l'intérieur du liquide qui n'est surmonté par aucune couche de vapeur.

Dans un troisième stade, les bulles de vapeur réparties dans l'eau disparaissent et l'on se trouve en présence d'une certaine quantité d'eau surmontée par une couche de vapeur stratifiée. La couche de vapeur augmente jusqu'à la vaporisation complète de l'eau.

Sur l'enceinte et de part et d'autre de celle-ci suivant la direction verticale et suivant une direction voisine sont disposés des transducteurs 4, 5, 6 et 7 permettant d'émettre et de capter des ondes ultrasonores à travers le fluide remplissant l'enceinte 1. Entre les transducteurs 4 et 5, la distance rectiligne sur laquelle les ondes ultrasonores se propagent est pratiquement identique à la longueur sur laquelle les ondes se propagent entre les transducteurs 6 et 7.

Les transducteurs 6 et 7 permettent l'émission et la réception d'une onde ultrasonore à basse fréquence, de l'ordre de 1 KHz. Les transducteurs 4 et 5 permettent l'émission et la réception d'ondes ultrasonores à haute fréquence de l'ordre de 1 MHz.

Le transducteur 4 permet de plus de capter au retour les ondes ultrasonores émises dans la direction verticale, après réflexion sur le niveau supérieur 8 de l'eau renfermant les bulles.

Des unités de calculs 10 et 11 permettent de déterminer le temps de propagation dans le fluide remplissant l'enceinte, des ondes haute fréquence et des ondes basse fréquence respectivement.

Un calculateur 12 permet le calcul de la différence entre les temps de propagation des ondes basse fréquence et des ondes haute fréquence.

La vitesse de propagation des ondes ultrasonores dans un milieu homogène, tel que l'eau et la vapeur, est indépendante de la fréquence de ces ondes.

En revanche, ces vitesse sont variables en fonction de la pression du fluide dans lequel elles se propagent.

Un capteur de pression 14 à l'intérieur du récipient 1 permet de déterminer la pression d'équilibre de la vapeur et de l'eau dans ce récipient. Cette pression correspond à une valeur bien déterminée de la température du fluide dans l'enceinte 1.

Lorsqu'une onde se propage dans de l'eau renfermant des bulles de vapeur sa vitesse de propagation dépend de sa fréquence et augmente avec cette fréquence.

Si la différence des temps de propagation $\triangle t\,BF - \triangle t\,HF$ dans le mélange diphasique liquide-gaz est nulle on peut en conclure que la vapeur contenue dans le récipient 1 est dans son intégralité sous forme d'une couche surmontant l'eau sous pression non vaporisée.

On peut alors déterminer le taux de vide dans le récipient 1 de deux façons différentes.

a) A partir de la valeur de la pression mesurée par le capteur 14, des unités de calcul 15 et 16 permettent de déterminer la vitesse des ultrasons dans la vapeur et dans l'eau à la pression mesurée par le capteur 14.

A partir de ces valeurs des vitesses des ultrasons et du temps de propagation dans ledit mélange calculé par exemple par l'unité de calcul 10, on peut déterminer, grâce à une unité de calcul 18, le taux de vide dû à la vapeur surmontant l'eau dans l'enceinte 1.

En effet, la longueur du parcours des ultrasons dans la vapeur qui est reliée de façon simple au taux de vide dans l'enceinte peut être déterminée très facilement à partir du temps de propagation des ondes et des vitesses des ultrasons dans la vapeur et dans l'eau à la pression considérée.

Dans le cas où les temps de propagation à haute et basse fréquences sont égaux, le taux de vide global est égal au taux de vide dû à la vapeur en phase stratifiée obtenu au moyen de l'unité de calcul 18.

b) Une seconde façon d'obtenir le taux de vide est de capter au moyen du transducteur 4 les ondes ultrasonores réfléchies par la surface 8 de l'eau, après un parcours représentant deux fois la hauteur h de la couche de vapeur au-dessus de l'eau dans l'enceinte 1.

Une unité de calcul 20 permet de déterminer le temps de propagation des ondes ultrasonores dans la vapeur, la longueur du trajet de ces ondes ultrasonores étant égale à 2 h.

L'unité de calcul 21 permet de déterminer à partir du temps de propagation des ondes dans la vapeur fourni par l'unité de calcul 20 et à partir de la vitesse des ultrasons dans la vapeur à la pression considérée fournie par l'unité de calcul 15, le taux de vide dû à la vapeur en phase stratifiée au-dessus de l'eau. Cette valeur est égale à la précision de la mesure près à la valeur obtenue grâce à l'unité de calcul 18.

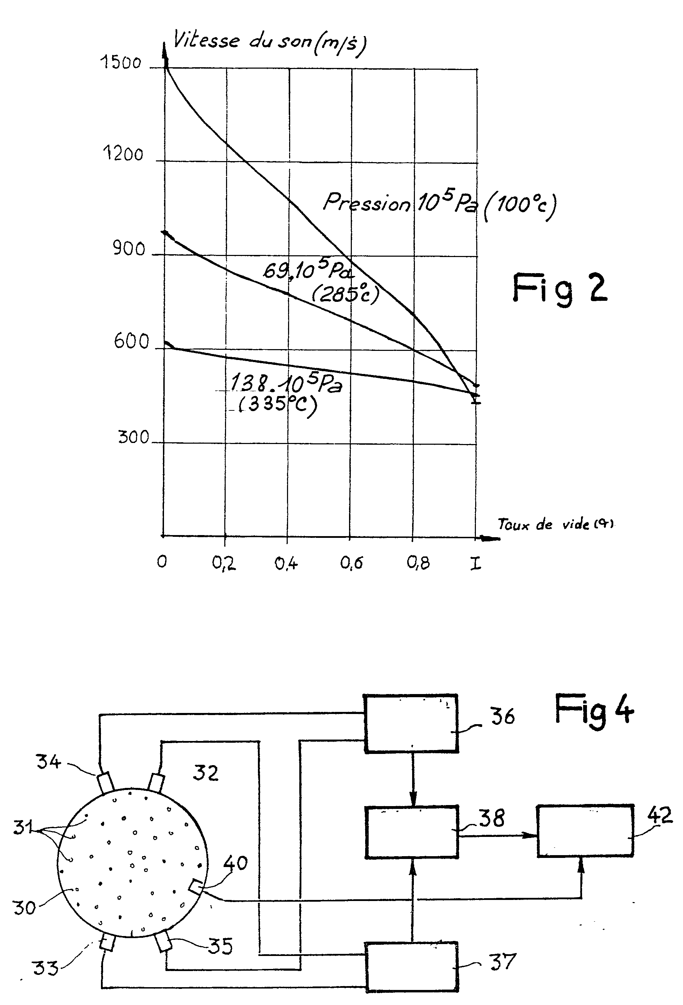

Sur la figure 2, on a représenté les variations de la vitesse du son dans un mélange stratifié eau-vapeur remplissant une conduite cylindrique horizontale en fonction du taux de vide $\alpha$ et pour différentes pressions du fluide remplissant la conduite correspondant à des températures bien déterminées de ce fluide.

Dans ce cas, il suffit de connaître la vitesse de propagation des ondes ultrasonores (ou le temps de propagation dans la conduite) ainsi que la pression du fluide pour déterminer de façon certaine le taux de vide dans la conduite.

Une unité de calcul ayant en mémoire les équations des courbes telles que représentées à la figure 2 et pour un nombre de pressions suffisant pour permettre l'extrapolation conduit à la détermination immédiate du taux de vide $\alpha$ à partir du temps de propagation des ondes ultrasonores dans la conduite renfermant de l'eau surmontée par de la vapeur.

Dans le cas où les temps de propagation des ondes à basse fréquence et des ondes à haute fréquence sont différents, on en déduit que la vapeur est au moins partiellement sous forme de bulles réparties dans de l'eau non vaporisée.

Dans ce cas, il faut déterminer si l'on se trouve en présence d'eau renfermant des bulles de vapeur surmontée par de la vapeur comme représenté à la figure 1 ou en présence d'eau renfermant des bulles occupant tout le volume de l'enceinte 1.

La présence d'un interface liquide-vapeur 8 peut être déterminée en captant l'onde réfléchie éventuellement sur la surface 8, grâce au transducteur 4.

L'unité de calcul 20 déjà décrite permet de calculer le temps de propagation des ondes dans la vapeur, suivant un parcours aller et retour entre le transducteur 4 et le niveau 8.

La connaissance de la vitesse des ultrasons dans la vapeur à la pression considérée fournie par l'unité de calcul 15 permet de déterminer la hauteur de vapeur h dans l'enceinte c'est-à-dire le taux de vide dans cette enceinte dû à la couche de vapeur surmontant l'eau non vaporisée contenant des bulles de vapeur.

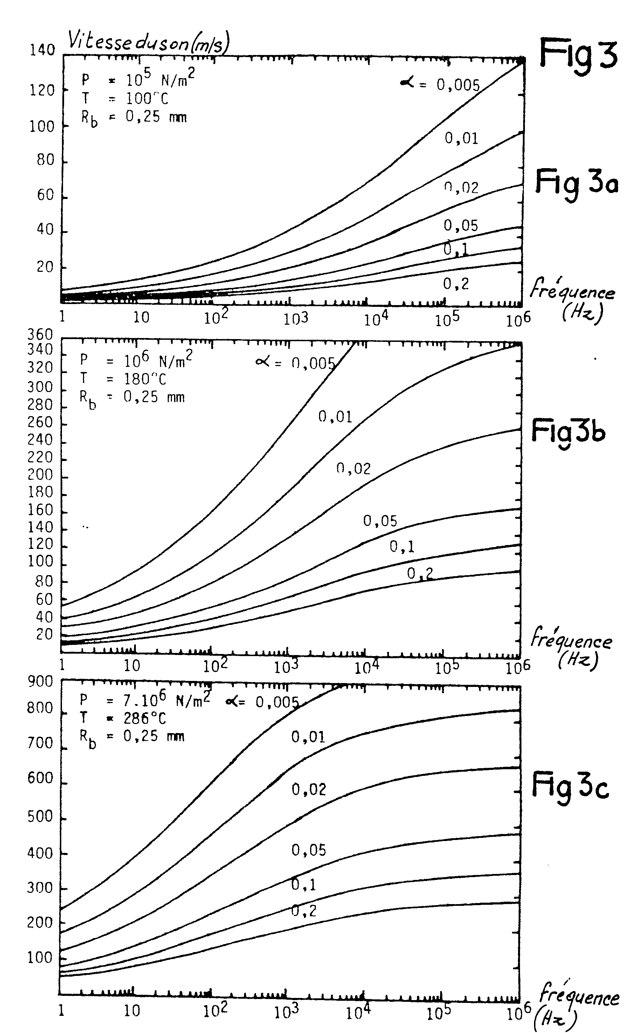

Sur la figure 3, on voit un ensemble de courbes représentant les variations de la vitesse des ondes ultrasonores en fonction de la fréquence, pour différentes valeurs du taux de vide α et pour différentes valeurs de la pression du fluide, dans le cas où ce fluide est constitué par de l'eau renfermant des bulles de gaz réparties dans la masse d'eau.

De telles courbes peuvent être mémorisées en grandes quantités dans une unité de calcul 24 recevant comme données d'entrée le temps de propagation des ondes à haute fréquence déterminé par l'unité de calcul 10, le temps de propagation des ondes dans la vapeur, en provenance de l'unité de calcul 20 et la pression du fluide remplissant l'enceinte 1. A partir de ces données d'entrée et des relations ou abaques mis en mémoire, l'unité de calcul 24 permet de déterminer la vitesse des ondes haute fréquence dans l'eau renfermant des bulles de vapeur et le taux de vide dû à la vapeur sous forme de bulles.

Ce taux de vide est additionné au taux de vide dû à la vapeur en phase stratifiée calculé par l'unité 21, dans un calculateur 25.

Le calculateur 25 peut alors donner la valeur du taux de vide global dans l'enceinte 1.

Le traitement par l'unité de calcul 24 est déclenché quand on détecte au niveau de l'unité de calcul 12 une différence entre les temps de propagation des ondes basse et haute fréquences.

Il est également possible de déterminer le taux de vide dû à la vapeur stratifiée et dû aux bulles de vapeur sans avoir recours à une mesure de temps de propagation d'une onde réfléchie sur la surface 8 de l'eau sous pression.

On utilise à cet effet une unité de calcul ayant en mémoire les courbes ou relations entre la vitesse de propagation des ondes et la fréquence dans un mélange d'eau et de bulles de vapeur, suivant la pression et suivant le taux de vide. De telles courbes sont représentées sur la figure 3. En effet, si L désigne la longueur du parcours des ondes dans toute la traversée du récipient 1, on peut écrire les relations suivantes:

$$\triangle t\,BF = \frac{h}{CV} + \frac{L-h}{C_1(HF)}$$

$$\triangle t\,HF = \frac{h}{CV} + \frac{L-h}{C_1(HF)}$$

V étant la vitesse des ondes ultrasonores dans la vapeur à la pression considérée, et $C_1(BF)$ et $C_1(HF)$ les vitesses des ondes ultrasonores dans le liquide renfermant les bulles à la pression considérée, pour les ondes basse fréquence et haute fréquence, respectivement.

La mise en mémoire des relations ou courbes représentées à la figure 3 dans l'unité de calcul permet d'introduire une relation entre $C_1(BF)$ et $C_1(HF)$.

Les données d'entrée dans l'unité de calcul sont les temps de propagation $\triangle t\,BF$ et $\triangle t\,HF$, la pression et la vitesse de propagation des ultrasons dans la vapeur, ce qui permet une détermination de la valeur de la hauteur h de la couche de vapeur et du taux de vide dû aux bulles de vapeur dans l'eau.

Ces valeurs sont déterminées par itération en utilisant les courbes mises en mémoire.

De la connaissance de la hauteur h on déduit grâce à l'unité de calcul le taux de vide dû à la vapeur stratifiée et le taux de vide global par addition de ce taux de vide dû à la vapeur stratifiée et du taux de vide dû aux bulles de vapeur dans l'eau.

On préfère cependant une méthode de détermination utilisant les ondes réfléchies qui permettent une meilleure discrimination entre les différents cas et une détermination plus précise des taux de vide.

Sur la figure 4, on voit la section 30 d'une conduite de grande dimension telle qu'une conduite du circuit primaire d'un réacteur à eau sous pression à l'intérieur de laquelle s'est produit un début de vaporisation. Des bulles de vapeur 31 se sont formées dans l'eau sous pression mais aucune couche de vapeur stratifiée n'a pu encore se former.

Dans ces conditions, on peut utiliser conformément au deuxième procédé selon l'invention que va être maintenant décrit un appareillage simplifié pour la mesure du taux de vide.

Cet appareillage comporte deux paires de transducteurs 32, 33 et 34, 35 disposés de façon diamètralement opposée sur la conduite 30.

La paire de transducteurs 32–33 permet l'émission et le captage d'une onde ultrasonore à une première fréquence, cependant que la paire de transducteur 34–35 permet l'émission et le captage d'une onde ultrasonore à une seconde fréquence.

Les temps de propagation de ces ondes ultrasonores dans le fluide remplissant la conduite 30 sont calculés par des unités de calcul 36 et 37. Une unité de calcul 38 permet de calculer le rapport $\dfrac{\triangle t1 - \triangle t2}{Log\ F1 - Log\ F2}$ entre la différence des temps de propagation des ondes et la différence des logarithmes des fréquences. Un capteur de pression 40 est disposé à l'intérieur de la conduite 30 pour fournir un signal représentatif de la pression du fluide remplissant la conduite 30 à une unité de calcul 42 recevant également de l'unité de calcul 38 un signal représentatif du rapport des différences de temps de parcours à la différence des fréquences des ondes ultrasonores.

L'unité de calcul 42 a, enregistrées en mémoire, les relations entre vitesse des ondes ultrasonores et fréquence, suivant les différents taux de vide et suivant les différentes pressions, déterminées par étalonage et telles que représentées, par exemple suivant la figure 3.

En fonction de la pression mesurée par le capteur 40 dans la conduite 30, l'unité de calcul 42 permet une comparaison du rapport

$$\frac{\triangle t1 - \triangle t2}{\text{Log } F1 - \text{Log } F2}$$ avec la pente des courbes donnant la variation de la vitesse du son en fonction de la fréquence.

Les fréquences F1 et F2 sont relativement proches, si bien que la comparaison des pentes et du rapport se fait au voisinage de l'une des fréquences ou d'une fréquence moyenne. Ceci permet de déterminer le taux de vide puisque, ainsi qu'il est visible sur la figure 3, les pentes des courbes varient fortement avec le taux de vide.

La mesure du taux de vide peut donc se faire de façon très rapide en utilisant des fréquences relativement proches pour les deux ondes ultrasonores.

Les parcours de ces ondes peuvent s'écarter fortement de la verticale et faire entre elles un angle important. En effet, la répartition des bulles dans le fluide est sensiblement homogène.

Cette méthode de détermination simplifiée du taux de vide est très utile dans les premières phases suivant une rupture sur le circuit primaire d'un réacteur à eau sous pression.

En effet, la vaporisation de l'eau commence par l'apparition de bulles de gaz à l'intérieur de l'eau sous pression.

C'est d'ailleurs la phase dans laquelle il est impératif de connaître le taux de vide de façon très précise et rapide pour pouvoir remédier très rapidement aux effets d'une rupture accidentelle sur le circuit primaire.

Dans la plupart des cas, les systèmes de sécurité sont conçus de façon qu'il est tout-à-fait improbable qu'un accident puisse conduire à une vaporisation avec constitution d'une couche de vapeur stratifiée.

On voit que les avantages du procédé suivant l'invention sont de permettre une détermination très rapide et très précise du taux de vide dans une enceinte ou une canalisation renfermant de l'eau sous pression, quel que soit l'état sous lequel se présente la vapeur.

De façon plus générale, le dispositif peut permettre de déterminer la proportion de gaz dans un liquide contenu dans une enceinte ou une canalisation.

L'invention ne se limite pas aux modes de réalisation qui ont été décrits. C'est ainsi qu'on peut utiliser les ondes réfléchies pour la mesure du taux de vide dû à une couche de gaz stratifiée et pour déterminer la présence d'un interface gaz-liquide dans l'enceinte ou au contraire utiliser une méthode ne faisant pas appel à l'échographie.

Au lieu d'une mesure de pression dans l'enceinte on peut effectuer une mesure d'un autre paramètre lié à la pression du fluide, par exemple la température.

Dans le cas où l'enceinte renferme un liquide ayant en suspension des bulles de gaz, on pourra choisir de façon quelconque les fréquences des ondes ultrasonores et les parcours de celles-ci à l'intérieur du fluide.

Le procédé suivant l'invention s'applique non seulement dans le cas de la détermination du taux de vide dans le circuit primaire d'un réacteur nucléaire à eau sous pression mais également dans le cas d'un liquide sous pression quelconque susceptible de se vaporiser et même dans le cas d'un liquide quelconque pouvant contenir un gaz dans une proportion variable.

**Revendications**

1. Procédé de mesure par ultrasons du rapport du volume de gaz présent dans une enceinte contenant un mélange diphasique liquide-gaz au volume total de l'enceinte, ledit rapport étant ci-après appelé taux de vide total, le gaz non dissous dans le liquide se présentant sous forme d'une couche surmontant le liquide et/ou sous forme de bulles réparties dans le liquide, ledit procédé étant caractérisé par les étapes suivantes:

a) on provoque la propagation, à travers ledit mélange, d'une première onde ultrasonore ayant une première fréquence, suivant un premier parcours peu incliné par rapport à une section verticale de cette enceinte et traversant celle-ci,

b) on provoque la propagation, à travers ledit mélange, d'une seconde onde ultrasonore ayant une seconde fréquence différente de ladite première fréquence, suivant un second parcours voisin dudit premier parcours,

c) on mesure la pression d'équilibre dudit mélange diphasique liquide-gaz, ou un paramètre physique directement lié à cette pression,

d) on mesure les temps de propagation des première et seconde ondes ultrasonores sur leur parcours respectif, on compare ces temps de propagation et, si ceux-ci sont égaux à un temps de propagation ci-après dénommé temps de propagation commun,

d1) on calcule, grâce au résultat de ladite mesure de pression d'équilibre, les vitesses de propagation des ondes ultrasonores, à cette pression équilibre d'une part dans le gaz, et d'autre part dans le liquide,

d2) on détermine enfin le taux de vide total à partir dudit temps de propagation commun et desdites vitesses de propagation,

e) alors que, si lesdits temps de propagation sont différents,

e1) on détermine la présence ou l'absence d'une onde ultrasonore réfléchie par l'interface gaz-liquide dudit mélange et si, cette onde réfléchie est présente, on mesure son temps de propagation dans le gaz,

e2) on calcule, grâce au résultat de ladite mesure de pression d'équilibre, la vitesse de propagation des ondes ultrasonores à cette pression d'équilibre dans le gaz,

e3) on détermine le taux de vide dû à la couche de gaz à partir dudit temps de propagation dans le gaz de l'onde ultrasonore réfléchie et de ladite vitesse de propagation des ondes ultrasonores dans le gaz,

e4) on calcule la vitesse de propagation de l'une au moins des première et seconde ondes ultrasonores à travers le liquide,

e5) on détermine, à partir de cette dernière vitesse de propagation et en utilisant les relations connues existant entre ladite pression d'équilibre, la fréquence des ondes ultrasonores et cette même vitesse de propagation dans le liquide, le taux de vide dû aux bulles de gaz réparties dans le liquide,

e6) con calcule enfin le taux de vide total par addition dudit taux de vide dû à la couche de gaz et dudit taux de vide dû aux bulles de gaz réparties dans le liquide.

2. Procédé de mesure suivant la revendication 1, caractérisé par le fait que, dans le cas où les temps de propagation des deux ondes ultrasonores sont identiques, on capte une onde réfléchie par l'interface gaz-liquide, on mesure le temps de propagation dans le gaz de cette onde réfléchie et on détermine à partir de ce temps de propagation et de la vitesse des ultrasons dans le gaz à la pression considérée, déterminée préalablement, le taux de vide total dans l'enceinte.

3. Procédé de mesure suivant la revendication 1, dans le cas où les temps de propagation des deux ondes sont différents, ce qui correspond au cas où une partie au moins du gaz est sous forme de bulles réparties dans le liquide, caractérisé par le fait qu'on détermine à partir des relations existant entre la hauteur d'une couche de gaz éventuelle au-dessus du liquide renfermant des bulles de gaz, les vitesses des ondes ultrasonores dans le gaz et dans le milieu liquide-bulles de gaz et les temps de propagation des ondes à travers le mélange remplissant l'enceinte d'une part et d'autre part de la relation entre les vitesses des ondes dans le milieu liquide-bulles de gaz à chacune des fréquences suivant le taux de vide dû aux bulles de gaz, déterminée préalablement par étalonnage, le taux de vide dû aux bulles de gaz réparties dans le liquide, la hauteur de gaz dans l'enceinte et le taux de vide dû au gaz surmontant le liquide, et on détermine le taux de vide total par addition du taux de vide dû au gaz surmontant le liquide et du taux de vide dû aux bulles de gaz réparties dans le liquide.

4. Procédé de mesure par ultrasons du rapport du volume de gaz présent dans une enceinte contenant un mélange diphasique liquide-gaz au volume total de l'enceinte, ou taux de vide total, le gaz se présentant uniquement sous forme de bulles réparties dans le liquide, caractérisé par le fait:

– qu'on provoque la propagation d'une première onde ultrasonore à une première fréquence suivant un parcours rectiligne traversant l'enceinte,

– qu'on provoque la propagation d'une seconde onde ultrasonore à une seconde fréquence dont la valeur est relativement proche, bien que différente, de celle de ladite première fréquence, suivant un second parcours traversant l'enceinte

– qu'on mesure le temps de propagation de la première et de la seconde ondes à travers le mélange remplissant l'enceinte,

– qu'on mesure la pression d'équilibre ou un paramètre physique directement lié à la pression d'équilibre du mélange remplissant l'enceinte,

– qu'on calcule le rapport de la différence des temps de propagation desdites première et seconde ondes ultrasonores à la différence des logarithmes desdites première et seconde fréquences,

– et qu'on détermine le taux de vide total dans l'enceinte, par comparaison du rapport obtenu avec la pente des courbes représentant les variations de la vitesse de propagation des ondes ultrasonores en fonction de la fréquence, suivant le taux de vide et la pression du mélange, ces courbes ayant été déterminées préalablement par étalonnage.

5. Application du procédé suivant l'une quelconque des revendications 1 à 4, à la mesure du taux de vide total dans le circuit primaire d'un réacteur nucléaire à eau sous pression, après un accident s'accompagnant d'une dépressurisation et d'une vaporisation au moins partielle de l'eau contenue dans l'enceinte, le gaz étant constitué par la vapeur d'eau se formant à partir de l'eau sous pression.

**Patentansprüche**

1. Verfahren zur Ultraschallmessung des Verhältnisses des Volumens eines Gases, das sich in einem mit einem Zweiphasengemisch aus Flüssigkeit und Gas gefüllten Behälter befindet, zum gesamten Volumen des Behälters, wobei dieses Verhältnis im folgenden gesamter Entleerungsgrad genannt wird, wobei das in der Flüssigkeit nicht gelöste Gas in Form einer über der Flüssigkeit befindlichen Schicht und/oder in Form von in der Flüssigkeit verteilten Blasen vorliegt, wobei das Verfahren sich durch die folgenden Schritte auszeichnet:

a) Man bewirkt das durch das Gemisch hindurch erfolgende Fortpflanzen einer ersten Ultraschallwelle mit einer ersten Frequenz längs einer ersten Bahn, die gegenüber einem den Behälter senkrecht schneidenden Schnitt ein wenig geneigt ist,

b) man bewirkt das durch das Gemisch hindurch erfolgende Fortpflanzen einer zweiten Ultraschallwelle mit einer von der ersten Frequenz abweichenden zweiten Frequenz längs einer der ersten Bahn benachbarten zweiten Bahn,

c) man misst den Gleichgewichtsdruck dieses Zweiphasengemisches aus Flüssigkeit und Gas oder einen mit diesem Druck unmittelbar verbundenen physikalischen Parameter,

d) man misst die Fortpflanzungszeiten der ersten und zweiten Ultraschallwellen auf ihren jeweiligen Bahnen, man vergleicht diese Fortpflanzungszeiten und, falls diese gleich einer im folgenden gemeinsame Fortpflanzungszeit genannten Zeit sind,

d1) vergleicht man dank dem Ergebnis dieser Gleichgewichtsdruckmessung die Fortpflanzungsgeschwindigkeiten der Ultraschallwellen mit diesem Gleichgewichtsdruck einerseits im Gas und andererseits in der Flüssigkeit,

d2) bestimmt man schliesslich den gesamten Entleerungsgrad aus der gemeinsamen Fortpflanzungszeit und den angegebenen Fortpflanzungsgeschwindigkeiten,

e) während, wenn sich die Fortpflanzungszeiten unterscheiden,

e1) man das Vorhandensein oder Fehlen einer Ultraschallwelle misst, die durch die Grenzschicht Gas-Flüssigkeit dieses Gemisches reflektiert wird, und bei Vorhandensein dieser reflektierten Welle man deren Fortpflanzungsgeschwindigkeit im Gas misst,

e2) man dank dem Ergebnis dieser Gleichgewichtsdruckmessung die Fortpflanzungsgeschwindigkeit der Ultraschallwellen bei diesem Gleichgewichtsdruck im Gas berechnet,

e3) man den durch die Gasschicht bedingten Entleerungsgrad bestimmt: aus der Fortpflanzungszeit der reflektierten Ultraschallwelle im Gas und aus der Fortpflanzungsgeschwindigkeit der Ultraschallwelle im Gas,

e4) man die Fortpflanzungsgeschwindigkeit wenigstens einer der ersten und zweiten Ultraschallwellen durch die Flüssigkeit berechnet,

e5) man aus dieser letzteren Fortpflanzungszeit und unter Verwendung der bekannten Beziehung zwischen dem Gleichgewichtsdruck, der Frequenz der Ultraschallwellen und derselben Fortpflanzungsgeschwindigkeit in der Flüssigkeit den Entleerungsgrad bestimmt, der durch die in der Flüssigkeit verteilten Gasblasen bedingt ist,

e6) man schliesslich den gesamten Entleerungsgrad berechnet durch Addition des durch die Gasschicht bedingten Entleerungsgrades und des durch die in der Flüssigkeit verteilten Gasblasen bedingten Entleerungsgrades.

2. Messverfahren nach Anspruch 1, dadurch gekennzeichnet, dass in dem Fall, in dem die Fortpflanzungszeiten der beiden Ultraschallwellen identisch sind, man eine durch die Grenzschicht Gas-Flüssigkeit reflektierte Welle auffängt, man die Fortpflanzungszeit dieser reflektierten Welle im Gas misst und man aus dieser Fortpflanzungszeit und aus der Ultraschallgeschwindigkeit im Gas beim betrachteten und vorher gemessenen Druck den gesamten Entleerungsgrad im Behälter bestimmt.

3. Messverfahren nach Anspruch 1 für den Fall, dass sich die Fortpflanzungszeiten der beiden Wellen unterscheiden, was dem Fall entspricht, dass wenigstens ein Teil des Gases in Form von in der Flüssigkeit verteilten Blasen vorliegt, dadurch gekennzeichnet,

dass man den durch die in der Flüssigkeit verteilten Blasen bedingten Entleerungsgrad, die Gashöhe im Behälter und den durch das über der Flüssigkeit befindliche Gas bedingten Entleerungsgrad bestimmt: einerseits aus den Beziehungen zwischen der Höhe einer eventuellen Gasschicht über der Gasblasen einschliessenden Flüssigkeit, den Geschwindigkeiten der Ultraschallwellen im Gas und in der aus Flüssigkeit und Gasblasen bestehenden Umgebung und den Fortpflanzungsgeschwindigkeiten der Wellen durch das den Behälter füllende Gemisch und andererseits aus der Beziehung zwischen den Geschwindigkeiten der Wellen in der aus Flüssigkeit und Gasblasen bestehenden Umgebung bei jeder der vorher durch Eichung bestimmten Frequenzen gemäss dem durch die Gasblasen bedingten Entleerungsgrad, und

dass man den gesamten Entleerungsgrad bestimmt durch Addition des Entleerungsgrads, der durch das die Flüssigkeit überlagernde Gas bedingt ist, und des Entleerungsgrades, der durch die in der Flüssigkeit verteilten Gasblasen bedingt ist.

4. Verfahren zur Ultraschallmessung des Verhältnisses eines Volumens eines Gases, das sich in einem mit einem Zweiphasengemisch aus Flüssigkeit und Gas gefüllten Behälter befindet, zum gesamten Volumen des Behälters oder des Entleerungsgrads, wobei das Gas ausschliesslich in Form von in der Flüssigkeit verteilten Blasen vorliegt, dadurch gekennzeichnet,

dass man das Fortpflanzen einer ersten Ultraschallwelle mit einer ersten Frequenz längs einer geradlinigen Bahn quer durch den Behälter bewirkt,

dass man das Fortpflanzen einer zweiten Ultraschallwelle mit einer zweiten Frequenz längs einer zweiten Bahn quer durch den Behälter bewirkt, wobei die Grösse der zweiten Frequenz derjenigen der ersten Frequenz verhältnismässig nahe kommt, sich aber hiervon unterscheidet,

dass man die Fortpflanzungsgeschwindigkeit der ersten und der zweiten Wellen durch das den Behälter füllende Gemisch misst,

dass man den Gleichgewichtszustand oder einen physikalischen Parameter misst, der mit dem Gleichgewichtsdruck des den Behälter füllenden Gemischs verbunden ist,

dass man das Verhältnis der Differenz der Fortpflanzungszeiten der ersten und zweiten Ultraschallwellen zur Differenz der Logarithmen der ersten und zweiten Frequenzen berechnet, und

dass man den gesamten Entleerungsgrad im Behälter bestimmt durch Vergleichen des Verhältnisses, das mit der Neigung von Kurven erhalten wird, die die Änderungen der Fortpflanzungsgeschwindigkeit der Ultraschallwellen in Abhängigkeit von der Frequenz darstellen gemäss dem Entleerungsgrad und dem Druck des Gemisches, wobei diese Kurven vorher durch Eichung bestimmt worden sind.

5. Anwendung des Verfahrens nach einem der Ansprüche 1 bis 4 bei der Messung des gesamten Entleerungsgrads im Primärkreis eines Druckwasserreaktors nach einem Unfall in Verbindung mit einer Druckabsenkung und einer wenigstens teilweisen Verdampfung des im Behälter enthaltenen Wassers, wobei das Gas aus dem vom Druckwasser gebildeten Wasserdampf besteht.

**Claims**

1. A method of ultrasonic measurement of the ratio of the volume of gas present in an enclosure containing a diphase liquid-gas mixture to the total volume of the enclosure, said ratio being hereinafter termed total void coefficient, the gasundissolved in the liquid assuming the form of a layer surmounting the liquid and/or the form of bubbles distributed in the liquid, characterised in that:

a) a first ultrasonic wave at a first frequency is propagated through said mixture in a first path of low inclination relative to a vertical section of this enclosure and crossing the latter,

b) a second ultrasonic wave at a second frequency different from said first frequency is propagated through said mixture in a second path close to said first path,

c) the equilibrium pressure of said diphase liquid-gas mixture, or a physical parameter directly related to this pressure, is measured,

d) the propagation times of the first and second ultrasonic waves in their respective path are measured, these propagation times are compared, and, if the latter are equal to a propagation time hereinafter termed common propagation time:

d1) the propagation velocities of the ultrasonic waves at this equilibrium pressure, on one hand, in the gas and, on the other hand, in the liquid, are calculated by means of the result of said equilibrium pressure measurement,

d2) the total void coefficient is determined from said common propagation time and said propagation velocities,

e) whereas if said propagation times are different:

e1) the presence or the absence of an ultrasonic wave reflected by the gas-liquid interface of said mixture is determined and, if this reflected wave is present, its propagation time in the gas is measured,

e2) the propagation velocity of the ultrasonic waves at this equilibrium pressure in the gas is calculated from the result of said equilibrium pressure measurement,

e3) the void coefficient due to the layer of gas is determined from said propagation time in the gas of the reflected ultrasonic wave and from said propagation velocity of the ultrasonic waves in the gas,

e4) the propagation velocity of at least one of the first and second ultrasonic waves through the liquid is calculated,

e5) the void coefficient due to the gas bubbles distributed in the liquid is determined from this last propagation velocity and by using the known relations existing between said equilibrium pressure, the frequency of the ultrasonic waves and this same propagation velocity in the liquid,

e6) and the total void coefficient is calculated by adding said void coefficient due to the gas layer and said void coefficient due to the gas bubbles distributed in the liquid.

2. A method of measurement according to claim 1, characterised in that, in the case where the propagation times of the two ultrasonic waves are identical, a wave reflected by the gas-liquid interface is captured, the propagation time in the gas of this reflected wave is measured and the total void coefficient in the enclosure is determined from this propagation time and the velocity of the ultrasounds in the gas at the previously determined considered pressure.

3. A method of ultrasonic measurement according to claim 1, in the case where the propagation times of the two waves are different, which corresponds to the case where at least a part of the gas is in the form of bubbles distributed in the liquid, characterised in that there are determined from the relations existing between the height of a possible gas layer above the liquid enclosing gas bubbles, the ultrasonic wave velocities in the gas and in the liquid-gas bubble medium and the propagation times of the waves through the mixture filling the enclosure, on one hand, and, on the other hand, from the relation between the velocities of the waves in the liquid-gas bubble medium at each of the frequencies according to the void coefficient due to the gas bubbles previously determined by calibration, the void coefficient due to the gas bubbles distributed in the liquid, the height of gas in the enclosure and the void coefficient due to the gas surmounting the liquid, and the total void coefficient is determined by adding the void coefficient due to the gas surmounting the liquid and the void coefficient due to the gas bubbles distributed in the liquid.

4. A method of ultrasonic measurement of the ratio of the volume of gas present in an enclosure containing a diphase liquid-gas mixture to the total volume of the enclosure, or total void coefficient, the gas being solely in the form of bubbles distributed in the liquid, characterised in that:

a first ultrasonic wave at a first frequency is propagated in a rectilinear path crossing the enclosure,

a second ultrasonic wave at a second frequency whose value is relatively close to, although different from, that of said first frequency, is propagated in a second path crossing the enclosure,

the propagation time of the first and second waves through the mixture filling the enclosure is measured,

the equilibrium pressure or a physical parameter directly related to the equilibrium pressure of the mixture filling the enclosure is measured,

the ration of the difference between the propagation times of said first and second ultrasonic waves to the difference between the logarithms of said first and second frequencies is calculated, and

the total void coefficient in the enclosure is determined by comparison of the ratio obtained with the gradient of the curves representing the variations of the propagation velocity of the ultrasonic waves as a function of the frequency, according to the void coefficient and the pressure of the mixture, thes curves having been previously determined by calibration.

5. An application of the method according to anyone of the claims 1 to 4, to the measurement of the total void coefficient in the primary circuit of a pressurized water nuclear reactor, after an accident accompanied by a depressurization and an at least partial vaporization of the water contained in the enclosure, the gas consisting of steam formed from the pressurized water.

Fig 1

Fig 2

Vitesse du son $(m/s)^{2/3}$

Pression $10^5 Pa$ $(100°c)$

$69,10^5 Pa$ $(285°c)$

$138.10^5 Pa$ $(335°C)$

Taux de vide (°)

Fig 4

Fig 3

Fig 3a

Fig 3b

Fig 3c